# EUROPÄISCHE PATENTSCHRIFT

(11) **EP 2 338 714 B1**
(45) Veröffentlichungstag und Bekanntmachung des Hinweises auf die Patenterteilung: **19.09.2012**
(21) Anmeldenummer: 11159045.1
(22) Anmeldetag: 30.07.2004
(51) Int. Cl.: B60J 1/20

(54) **Aus Kunststoff gespritzte Führungsschiene**
Moulded plastic guide rail
Glissière en matière plastique moulée

(30) Priorität: 28.08.2003 DE 10339583
(43) Veröffentlichungstag der Anmeldung: 29.06.2011
(62) Teilanmeldung aus: 04018091.1
(73) Patentinhaber: BOS GmbH & Co. KG, 73760 Ostfildern (DE)
(72) Erfinder: Hansen, Melf, 75053, Gondelsheim (DE); Walter, Herbert, 73061, Ebersbach (DE); Maier, Matthias, 73733, Esslingen (DE); Weinbrenner, Harry, 72644, Oberboihingen (DE); Bühl, Olaf, 73095, Albershausen (DE)
(74) Vertreter: Rüger, Barthelt & Abel

(56) Entgegenhaltungen:
- EP-A- 1 215 063
- CH-A- 455 231

## Beschreibung

Die DE 100 57 759 A1 zeigt ein Heckscheibenrollo für Kraftfahrzeuge. Zu dem Heckscheibenrollo gehört eine unterhalb der Hutablage drehbar gelagerte Wickelwelle, an der mit einer Kante die Rollobahn befestigt ist. Die Rollobahn ist etwa trapezförmig zugeschnitten und mit ihrer anderen, von der Wickelwelle abliegenden Kante an einem Zugstab befestigt. Der Zugstab wird seitlich in zwei Führungsschienen geführt, die an der Innenseite der Heckscheibe aufgeklebt bzw. hinter der C-Säulenverkleidung in der Karosserie verborgen sind. In den Führungsschienen laufen biegeelastische Schubglieder, die ausknicksicher in den Führungsschienen geführt sind.

Die Führungsschienen bestehen aus einem Aluminiumstrangpressprofil, das eine durchgehende hinterschnittene Nut enthält. Die Nut setzt sich zusammen aus einem kreisförmigen Querschnittsabschnitt und einem rechteckförmigen, wobei der rechteckförmige schmäler ist als es dem Duchmesser des Kreises entspricht. Der rechteckförmige Abschnitt bildet den Schlitz, über den die Führungsnut nach außen hin offen ist.

In den Führungsschienen laufen Gleit- oder Führungskörper, die einen Kopf aufweisen, der im Querschnitt an den kreisförmigen Abschnitt des Führungsschienenprofils angepasst ist. Dieser Kopf hat entweder die Gestalt einer Kugel oder eines kurzen zylindrischen Stückes, das so bemessen ist, dass es in den gekrümmten Abschnitten der Führungsschienen nicht klemmt. Der Durchmesser des Halses ist so bemessen, dass er klemmfrei durch den Schlitz der Führungsnut passt.

Der Kopf des Führungsteils des Auszugprofils besteht üblicherweise aus einem gespritzten Kunststoff.

Es hat sich im Laufe der Zeit herausgestellt, dass die Paarung aus dem Kunststoff und der Aluminiumschiene nicht unter allen Bedingungen klapperfrei ist.

Die Reibpaarung aus den Kunststoffführungskörpern und der Aluminiumschiene ist ebenfalls nicht optimal.

Schließlich bestehen gewisse Schwierigkeiten, die Führungsschiene mit der Innenverkleidung zu kombinieren.

Aus der CH 455 231 A ist eine Führung für senkrecht fallende, aufrollbare Stores bekannt, bei denen seitliche Führungsschienen zweigeteilt ausgebildet sind. Die Führungsschiene weist ein erstes Teil mit einer Leiste und ein zweites Teil mit einer Nut auf, die die Leiste aufnimmt. Auf diese Weise sind beide Teile zu einem Profil zusammengefizgt, in dem ein Führungsstab des Stores mit Spiel geführt ist.

Ausgehend hiervon ist es Aufgabe der Erfindung, eine neue Führungsschienenanordnung zu schaffen, die die Nachteile nach dem Stand der Technik vermeidet.

Diese Aufgabe wird erfindungsgemäß durch die Führungsschienenanordnung mit en Merkmalen des Anspruches 1 gelöst.

Bei der Lösung ist vorgesehen, dass die Führungsschienenanordnung aus einem ersten und einem zweiten Teil besteht, die beide als Formteil hergestellt sind, wobei die Fuge, an denen die beiden Teile miteinander gefügt sind, in Längsrichtung der Führungsnut verlaufen. Dadurch können die beiden Teile, jedes für sich, frei von Hinterschneidungen gehalten sein. Erst nach dem Fügen der beiden Teile entsteht die hinterschnittene Führungsnut für das Rollo.

Da jedes Teil für sich frei von Hinterschneidungen ist, besteht hier die Möglichkeit, eines der beiden Teile mit einem Abschnitt der Innenverkleidung, beispielsweise der C-Säule einstückig zu integrieren, d.h. diesen Teil der Führungsschienenanordnung mit dem plattenförmigen Teil der Seitenverkleidung einstückig zu spritzen.

An beiden Teilen sind Verbindungsmittel vorgesehen um die beiden Teile relativ zueinander zu positionieren.

Die Verbindungsmittel können sich auch über die gesamte Länge der beiden Teile erstrecken. Erfindungsgemäß besteht eines der Verbindungsmittel in einer Leiste, während das andere Verbindungsmittel eine Nut ist. Um eine Positionierung in Längsrichtung der Führungsnut zu erreichen trägt die Leiste Zapfen , die in zusätzliche Öffnungen in die Nut eingreifen.

Um einen günstigen Kräfteverlauf zu erzielen, der keine ungünstige Sprengwirkung auf die beiden Teile ausübt, wenn das Führungsstück des Rollos durch die Führungsnut läuft, ist es von Vorteil, wenn die Leiste unter einem spitzen Winkel zu einer Ebene verläuft, die durch den Schlitz definiert ist und durch den Schlitz hindurch führt.

Zusätzlich zu den beiden Teilen, die miteinander verbunden sind, kann noch ein Stützteil vorgesehen sein, das aus einem weniger verformbaren Material besteht und das auf die beiden Teile aufgesetzt wird. Es dient dazu, einen Verzug der Kunststoffformteile zu verhindern. Dieser Verzug kann durch Alterungen oder alterungsbedingten Schwund hervorgerufen werden. Die Stützteile stablisieren die Nut und sorgen dafür, dass der Schlitz der Führungsnut über die Länge gesehen eine konstante Weite beibehält.

Die beiden Teile können miteinander, zumindest Abschnittsweise stoffschlüssig verbunden sein. Zum stoffschlüssigen Verbinden kommen Laserschweißen, Ultraschallschweißen, Kleben oder sonstige Verbindungstechniken in Frage.

Im Übrigen sind Weiterbildungen Gegenstand von Unteransprüchen.

Nach dem Lesen der Beschreibung wird dem Fachmann klar, dass eine Reihe von Abwandlungen möglich sind.

In der Zeichnung sind Ausführungsbeispiele des Gegenstandes der Erfindung dargestellt. Es zeigen:
- Fig. 1: eine teilweise aufgebrochene Heckpartie eines Kraftfahrzeuges, in einer perspektivischen Darstellung mit Blick gegen die Innenseite der Heckscheibe,
- Fig. 2: den prinzipiellen Aufbau des Heckscheibenrollos nach Fig. 1,
- Fig. 3: eine nicht zur Erfindung gehörende Führungsschienenanordnung bestehend aus einem Stützteil und einem Außenteil, in einem Schnitt quer zur Längserstreckung der Führungsnut,
- Fig. 4: ein Ausführungsbeispiel der erfindungsgemäßen Führungsschienenanordnung aus zwei miteinander gefügten Teilen, die gemeinsam die Führungsnut begrenzen, in einer ersten Höhe geschnitten quer zur Längserstreckung der Führungsnut,
- Fig. 5: die Führungsschienenanordnung nach Figur 4, geschnitten in einer anderen Höhe, und
- Fig. 6: eine Ausführungsform einer erfindungsgemäßen Führungsschienenanordnung ähnlich der nach Fig. 4, jedoch eingesetzt in eine Nut einer Seitenverkleidung.

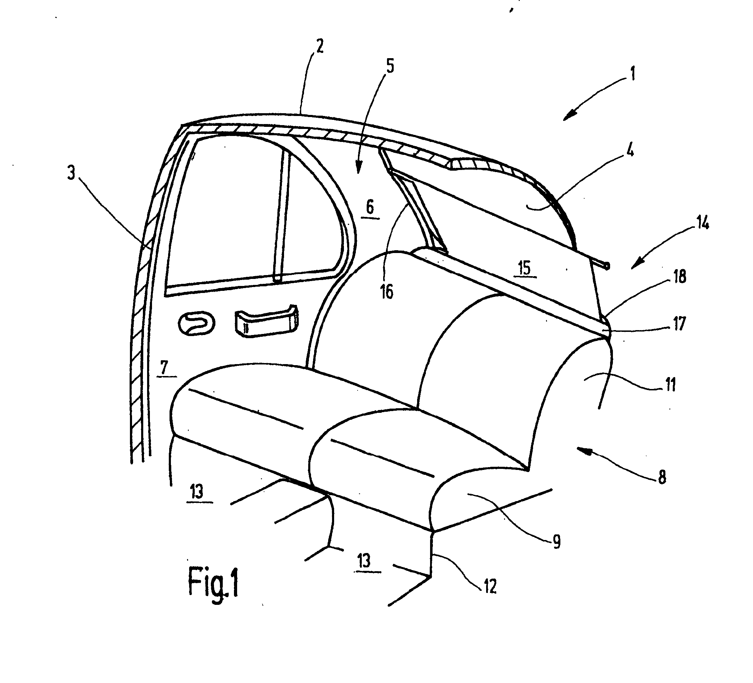

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

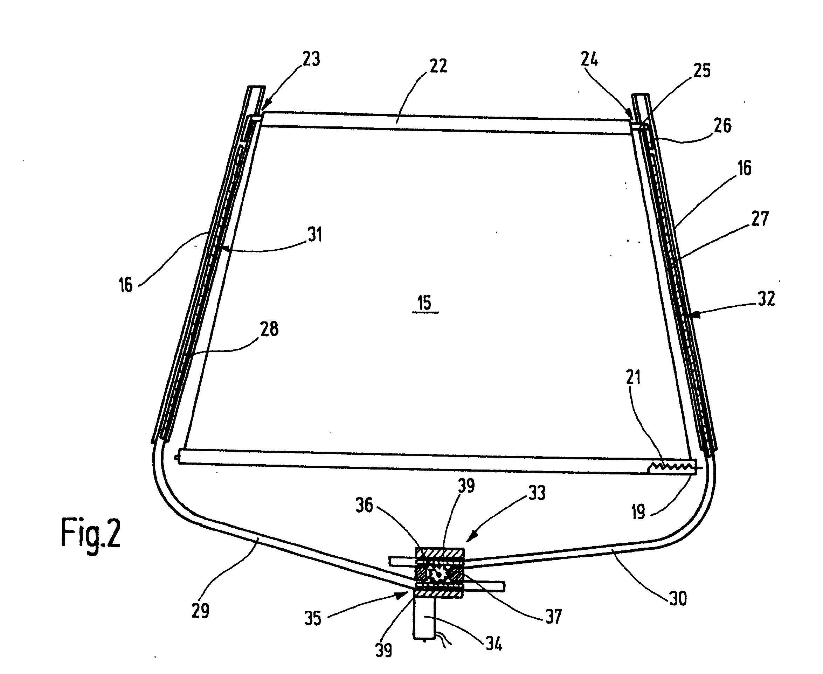

Der prinzipelle Aufbau des Heckscheibenrollos 14 ergibt sich aus Fig. 2.

Unterhalb der Hutablage 17 ist, wie sich aus Fig. 2 ergibt, eine Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

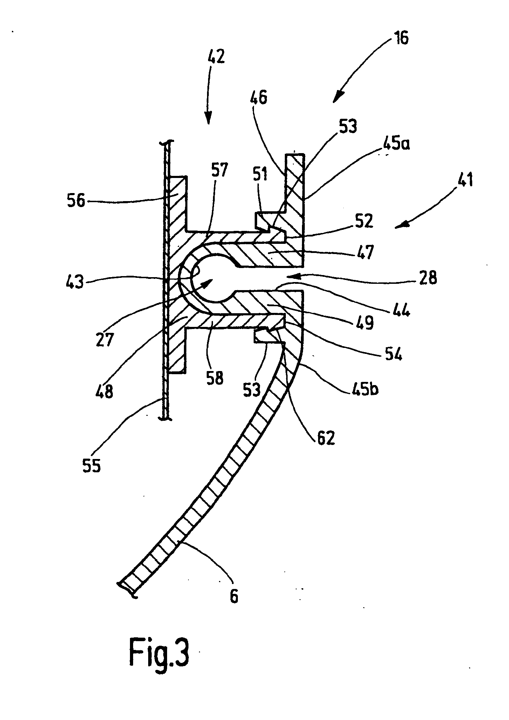

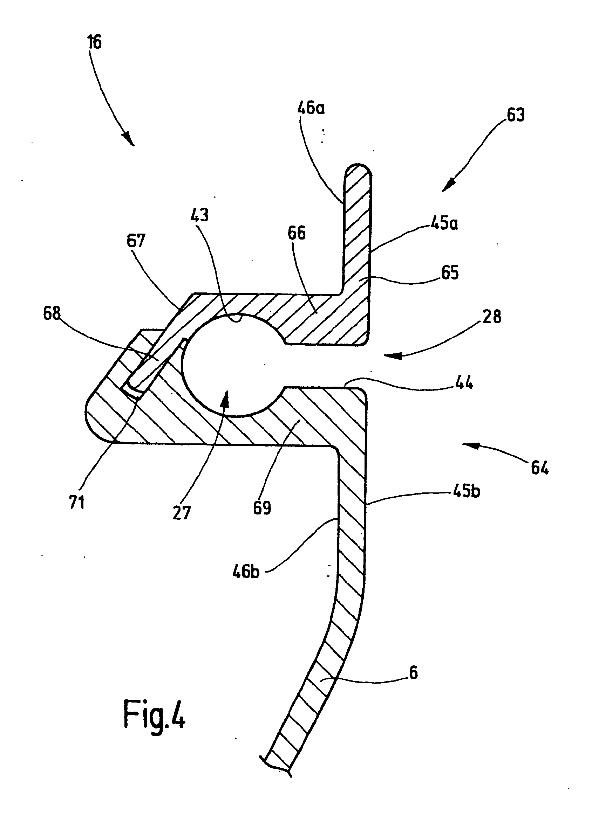

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind. Der Aufbau der Führungsschienen 16 ist weiter unten anhand der Fig. 3 und 4 erläutert.

Jede der Führungsschienen 16 enthält eine Führungsnut 27, die sich in Richtung auf die Rollobahn 15 in einem Führungsschlitz 28 öffnet.

Das untere Ende jeder Führungsschiene 16 ist mit einem Führungsrohr 29, 30 verbunden, in denen knicksteif zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

Fig. 3 zeigt im Querschnitt den Aufbau von nicht zur Erfindung gehörenden Führungsschienen 16.

Entsprechend dem Querschnitt nach Fig. 3 setzt sich die Führungsschiene 16 aus einem Außenteil 41 und einen Stützteil 42 zusammen. Das Außenteil 41 besteht aus einem thermoplastischen Kunststoff und geht einstückig in die Innenverkleidung 6 der C-Säule 5 über. Das Außenteil 41 enthält die hinterschnittene Führungsnut 27, die sich über den Schlitz 28 nach außen öffnet. Im Querschnitt gesehen setzt sich die Führungnut 27 gedanklich aus einem kreisförmigen Abschnitt 43 und einem rechteckigen Abschnitt 44 zusammen. Der Durchmesser des kreisförmigen Abschnitts 43 ist an den Durchmesser der Führungstücke 26 angepasst.

Das Außenteil 41 zeigt eine Außen- oder Sichseite 45 auf, zu der etwa parallel eine Rückseite 46 verläuft. Die Außenseite 45 wird durch den Schlitz 28 in einen Abschnitt 45 a und einen Abschnitt 45 b aufgeteilt.

Neben dem Schlitz 28 bildet das Außenteil 41 einen aus der Rückseite 46 vorstehenden Wandabschnitt 47, der an seinem freien Ende einen Wandbereich 48 übergeht, der einem Kreisabschnitt folgt. An den Wandabschnitt 48 schließt sich wieder ein gerader Wandabschnitt 49 an, der zu dem Wandabschnitt 47 parallel ist und in den Wandabschnitt 45 b einmündet.

Wie der Querschnitt erkennen lässt, ist die Struktur an der Rückseite 46 frei von Hinterschneidungen, d.h. die beiden Wandabschnitte 47 und 49 werden von an der Außenseite von zwei zueinander parallelen Seitenwänden begrenzt.

Neben dem Wandabschnitt 47 verläuft parallel zur Längserstreckung des Schlitzes 48 eine erste Hakenleiste 51, die, zusammen mit dem Wandabschnitt 47 an der Innenecke eine Nut 52 entstehen lässt. Spiegelbildlich dazu ist eine zweiten Hakenleiste 53 vorgesehen, die neben der Außenseite des Wandabschnitts 49 angeordnet ist und zusammen mit der Außenseite des Wandabschnitts 49 eine Nut 54 bildet.

Die Dimensionierungen der beiden Hakenleisten 51 und 53 sind so gewählt, dass das Außenteil 41 nach dem Spritzen ohne weiteres von dem komplementären Formnest der Spritzgussform abgezogen werden kann, indem die Elastizität der Hakenleisten 51 und 53 ausgenutzt wird. Auf diese Weise ist die Verwendung von komplizierten Werkzeugen mit beweglichen Kernen zum Erzeugen von Hinterschneidungen insoweit entbehrlich.

Außerdem ist die Wandstärke im Bereich des Wandabschnitts 48, der den zylindrischen Bereich 43 des Querschnittsprofils umgibt, in Relation zu der Weite des Schlitzes 28 so gewählt, dass das fertig gespritzte Außenteil 41 von dem Formkern zum Erzeugen des Querschnitts 43 und des Querschnitts 44 abgezogen werden kann, und zwar in Richtung senkrecht zu der Ebene, die durch die Außenseite 45 a bzw. 45 b gebildet ist. Beim Abziehen von dem Spritzgusswerkzeug wird das Außenteil 41 im Bereich der Führungsnut aufgeweitet, bis der entsprechende Teil des Formkerns durch den Schlitz 28 herausgleiten kann. Aufgrund der Eigenelastizität kann das Außenteil 41 anschließend in die ursprünglich geplante Gestalt zurückfedern.

Da eine solche Struktur für sich genommen unter Umständen zu nachgiebig wäre, um einwandfrei die Führungsglieder 26 zu führen, ohne dass diese aus der Führungsnut 27 freikommen könnten, ist das Stützteil 42 vorgesehen. Das Stützteil 42 ist karosseriefest angeordnet, wie dies eine schematisch angedeuteter Abschnitt 55 der Innenseite des Karosseriebleches erkennen lässt. Das Stützteil 42 setzt sich aus einer Befestigungsplatte 56 zusammen, von der zwei Schenkel 57 und 58 aufragen. Die Schenkel 57 und 58 begrenzen einen Innenraum, der dazu geeignet ist, spielfrei die Struktur aufzunehmen, die die rückseitige Kontur des Außenteils 41 im Bereich der Führungsnut 27 bildet. Im Einzelnen setzt sich diese U-förmige Öffnung aus einem bogenförmigen Teil zusammen, an dem sich der Wandabschnitt 48 anlegt, sowie zwei zueinander parallelen Flächen, an denen sich die Außenseiten der Wandabschnitte 47 und 49 anlegen.

Die freien Enden der beiden Schenkel 57 und 58 sind mit flachen Hakennasen 59 und 61 versehen, die zu den Hakenleisten 51 und 53 komplementär sind.

Das Stützteil 52 besteht aus einem relativ festen und verhältnismäßig unelastischem Material, das in der Lage ist den in Betrieb auftretenden Kräften, die eine Aufweitung des Schlitzes 28 bewirken wollen, hinreichenden Widerstand entgegensetzt.

Beispielsweise besteht das Stützteil 42 aus einem Aluminiumstrangpressprofil, das gegebenenfalls nachfolgend noch entsprechend dem gewünschten Verlauf, gebogen werden kann.

Im montierten Zustand greifen die beiden freien Schenkel 57 und 58 in die Nuten 52 und 54 ein und werden dort, wie gezeigt, verrastet. Hierdurch wird gleichzeitig eine Verankerung der Innenverkleidung 6 im Bereich der Führungsschiene 16 erreicht.

Bei dieser Lösung wird eine Führungsschiene 16 erhalten, die sich über eine große Länge aus Kunststoff fertigen lässt, wobei kein beweglicher Kern in dem Spritzgusswerkzeug erforderlich ist. Eine solche Form wäre sehr schwer herzustellen und extrem teuer, denn bei einem Durchmesser des kreisfömigen Teils 43 der Führungsnut 27 von ca. 8 mm ist es nur sehr schwer möglich, diesen Kern als beweglichen Kern auf eine Länge von ca. 50 cm positionsrichtig zu halten. Der Aufbau der Führungsschiene 16 vermeidet einen solchen beweglichen Kern. Vielmehr kann der Kern starr an einem Steg befestigt werden, der den Schlitz 28 abformt.

Ein weiterer Vorteil dieser Lösung besteht darin, dass die für den Betrachter sichtbare Farbe der Führungsschiene 16 exakt der Farbe der Innenverkleidung 6 entspricht. Es müssen keine Vorkehrungen getroffen werden, um eine glänzende Aluminiumschiene zu verbergen, wie diese beim Stand der Technik erforderlich ist.

Ferner zeigt das thermoplastische Material günstigere Gleiteigenschaften in Verbindung mit dem Führungskörper 26. Es besteht keine Notwendigkeit mehr den Führungskörper 26 unbedingt aus Kunststoff herstellen zu müssen oder mit Kunststoff beschichten zu müssen, um günstige Gleiteigenschaften zu erhalten, wie dies erforderlich ist, wenn die Führungsschiene aus Aluminiumprofil bestehen würde.

Schließlich neigt die Kunststoffoberfläche aufgrund der Nachgiebigkeit weit weniger zu Klappergeräuschen, als eine harte Metalloberfläche.

Das Metall beschränkt sich auf den Stützteil 42. Der unverformbare Stützteil 42 gewährleistet über lange Zeit die Formtreue der Führungsnut 27.

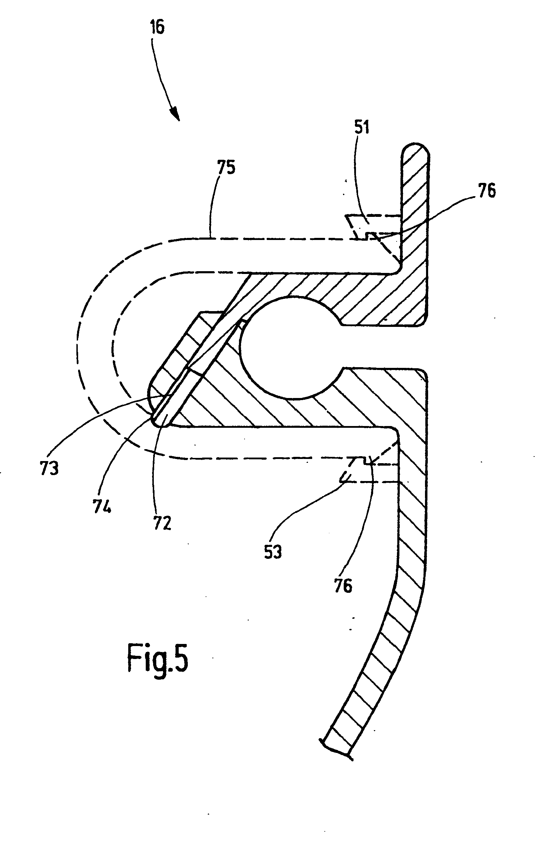

In den Fig. 4 und 5 ist ein erfindungsgemäßes Ausführungsbeispiel einer aus Kunststoff bestehenden Führungsschiene 16 gezeigt. Soweit an diesem Ausführungsbeispiel Strukturelemente wiederkehren, die mit Strukturelementen identisch oder gleichwertig sind, wie sie bereits im Zusammenhang mit Figur 3 erläutert wurden, so wird hierfür dasselbe Bezugszeichen verwendet ohne eine weitere ausführliche Erläuterung zu geben.

Wie die Figuren erkennen lassen, weist die Führungsnut 27 die bereits erläuterte Gestalt auf in dem Sinne, dass sie aus einem kreisförmigen Abschnitt und einem rechteckförmigen Abschnitt besteht, der dem Schlitz 28 entspricht.

Die Führungsschiene 16 gemäß Fig. 4 ist zweiteilig, wobei ein erstes Teil 63 einstückig mit dem Abschnitt 45 a und ein anderes Teil 64 einstückig mit dem Abschnitt 45 b verbunden ist.

Der Sichtseitenabschnitt 45 a ist Teil eines Flansches 65, der bis zu dem Schlitz 28 reicht und dort in einen Wandabschnitt 66 übergeht. Der Wandabschnitt 66 a endet an einer Fläche 67, die unter einem Winkel von ca. 30 bis 60 Grad gegenüber der Sichtseite 45 a verläuft.

Der Flansch 45 bildet zusammen mit dem Wandabschnitt 66 etwa eine rechtwinklige Profilschiene, die auf ihre Seite des Wandabschnittes oder Schenkels 66 auf dessen außen, von der Innenecke weg zeigenden Seite, wie die Figur 4 erkennen lässt, einen Teil der Wand bildet, die dem kreisförmigen Querschnittsabschnitt 43 entspricht sowie einen Wandabschnitt, der dem rechtseckigen Querschnittsprofilabschnitt 44 begrenzt.

Die Wand 67 endet etwa auf der Höhe einer Ebene, die bezogen auf Fig. 4 der oberen Begrenzungswand des Schlitzes 28 entspricht. Ab dieser Stelle geht die Wand oder der Schenkel 66 in eine schmale Leiste 68 über die, wie gezeigt, über eine Ebene hinausragt, die durch den Mittelpunkt des kreisförmigen Abschnittes 43 und die Mitte des Schlitzes 28 definiert ist.

Die Übergangsstelle zwischen der Wand 67 zu der Leiste 68, die an der Außenseite im Übrigen glatt ist, liegt, wenn man den kreisförmigen Abschnitt 43 als Uhr auffasst, zwischen 10 Uhr und 11 Uhr.

Der andere Teil 64 der Führungsschiene 16 ist einstückiger Bestandteil der Innenverkleidung 6 und zeigt im Grunde genommen eine Ähnliche komplementäre Gestalt wie der Teil 63. An den Sichtseitenabschnitt 45 b schließt sich ein Schenkel 69 an, der zu dem Schenkel 66 parallel liegt. Die in dem Schenkel 66 zugekehrte Seite des Schenkels 69 weist eine Außenkontur auf, die die Außenkontur des Schenkels 66 zu der vollständigen Führungsnut 67 ergänzt.

Auf der dem Schlitz 68 gegenüberliegenden Seite ist der Schenkel 69, der ein Stück weit nach oben über den Schlitz 28 überragt, mit einer Nut 71 versehen, die im montierten Zustand, wie gezeigt, die Leiste 68 aufnimmt. Sowohl die Leiste 68 als auch die Nut 71 erstrecken sich über die gesamte Länge der Führungsschiene 16.

Um in Längsrichtung der Führungsschiene 16 die beiden Teile 63 und 64 positionsrichtig zu halten, trägt die Leiste 68, wie Figur 5 zeigt, in Abständen von ca. 5 cm bis 10 cm Laschen 72. Diese Laschen 72 stecken im montierten Zustand in rechteckförmigen Öffnungen 73, die im Grund der Nut 71 in deren Verlängerung angebracht sind.

Auf den Laschen 72 können Rippen 74 vorgesehen sein, die es ermöglichen, dort lokal die betreffende Wand der Öffnung 73 mit der Rippe 74 zu verschweißen. Dieses Verschweißen kann ein Ultraschallschweißen sein, indem dort entsprechende Sonotroden aufgedrückt werden, oder es besteht auch die Möglichkeit hier die Teile miteinander Laser zu schweißen.

Sollte die Gefahr bestehen, dass die aus Thermoplast bestehenden Teile 63 und 64 langfristig nicht hinreichend formstabil sind, was zu einem Ändern der Weite des Spaltes 28 führen könnte, kann zusätzlich ein Stabilierungsträger verwendet werden, wie er bei 75 in Fig. 5 gestrichelt angedeutet ist. Der Stabilisierungsträger 75 ist kürzer als die Führungsschiene 16 und weist im Wesentlichen eine U-förmige Gestalt auf und ist an seinen freien Enden mit nach außen weisenden Hakennasen 76 und 77 versehen, die mit Hakenleisten 51 und 53 zusammenwirken, wie dies in ähnlicher Weise anhand von Fig. 3 erläutert ist.

Da das Stabilisierungsteil 75 gleichzeitig mit der Innenseite seiner Schenkel an der Außenseite der Schenkel 66 und 69 anliegt, kann sich der Schlitz 28 weder erweitern, noch in der Breite verringern.

Mehrere solche Stabilisierungsträger 75 können im Abstand voneinander aufgesteckt sein.

Wie die Fig. 4 bzw. Fig. 5 erkennen lässt, sind die beiden Teile 63 und 64 wiederum praktisch hinterschneidungsfrei. Die Hakenleisten 51 und 53 weisen, wenn sie vorhanden sind, so geringfügig Hinterschneidungen auf, dass ohne weiteres die Eigenelastizität dieser Hakenleisten 51 und 53 ausreichen würde um sie aus dem Spritzwerkzeug herauszunehmen, ohne einen ziehbaren Kern zu erfordern. Die gezeigte Struktur ermöglicht es wiederum, eine Führungsschiene aus Kunststoff zu spritzen unter Verwendung von sehr kostengünstigen Spritzgusswerkzeugen. Die Vorteile, die mit einer aus Kunststoff bestehenden Führungsschiene verbunden sind, wurden bereits im Zusammenhang mit Fig. 3 ausführlich erläutert, so dass eine Wiederholung hier entbehrlich ist.

Die Führungsschienen 16 nach den Fig. 3 und Fig. 4 wurden jeweils so erläutert, als seien sie, zumindest abschnittsweise, Teil der Innenverkleidung, beispielsweise der C-Säule. Es versteht sich jedoch, dass auch die Führungsschienen 16 hiervon getrennt ausgebildet sein können und mit nicht weiter gezeigten Laschen oder sonstigen Rastgliedern mit entsprechend komplementären Rastgliedern der Seitenverkleidung oder der Karosserie verbunden werden können. Der Sichtseitenabschnitt 45 B würde dann etwa an der Stelle enden, an der in den gezeigten Figuren der bogenförmige Verlauf beginnt. Die Laschen zum verrasten der Führungsschiene 16 würden beispielsweise im Falle der Ausführung nach den Figuren 4 und 5 in Verlängerung des Schlitzes 28 auf dem Schenkel 69 angeordnet sein.

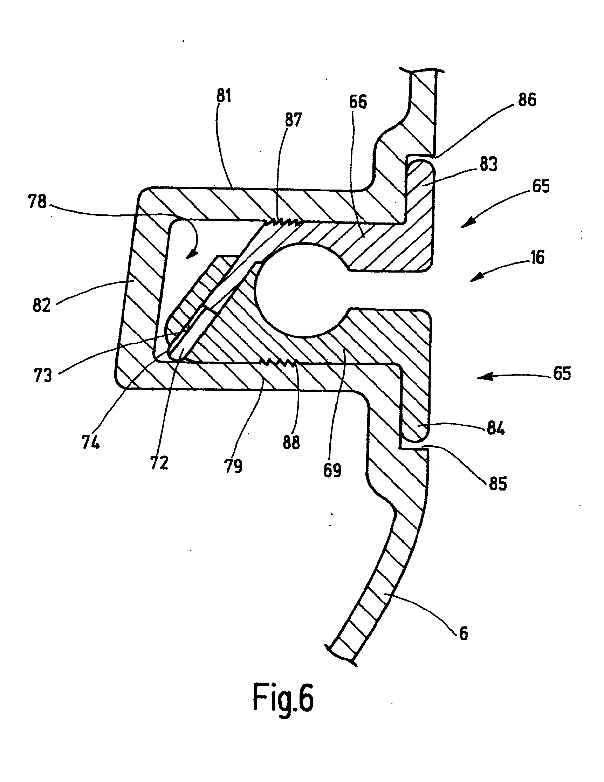

Fig. 6 zeigt eine erfindungsgemäße Ausführungsform der Führungsschienenanordnung 16, die im Grunde genommen der Ausführung nach denen Fig. 4 und 5 entspricht. Allerdings ist hierbei die Führungsschienenanordnung 16 in eine Nut 78 eingesetzt, die in dem Seitenverkleidungsteil 6 ausgebildet ist. Das Seitenverkleidungsteil 6 setzt sich somit einstückig über die Nut 78 hinaus fort.

Die Nut 78 wird seitlich von zwei Wänden 79 und 81 begrenzt. Die Nut 78 ist in diesem Bereich parallelflankig. Die beiden Seitenwände 81 und 79 werden durch einen Boden 82 einstückig miteinander verbunden. Die Führungsschienenanordnung 16 entspricht, wie bereits erwähnt, der Führungsschienenanordnung 16 nach den Fig. 4 und 5 und setzt sich aus den beiden Teilen 64 und 65 zusammen. Sie bilden auf der Außenseite des Seitenverkleidungsteiles kurze leistenartige Flansche 83 und 84, die in entsprechenden Vertiefungen 85 und 86 des Seitenverkleidungsteils 6 bündig versenkt sind.

Um die Führungsschienenanordnung 16 in der Nut 78 formschlüssig zu halten, sind auf der Außenseite des Schenkels 66 und auf der Außenseite des Schenkels 69 Rillungen 87 und 88 vorgesehen, die ein sägezahnförmiges Profil aufweisen und die zu Rillungen auf der Innenseite der Wände 81 und 79 komplementär sind.

Ein Fensterrollo für Kraftfahrzeuge weist aus Kunststoff bestehende Führungsschienen auf. Die Führungsschienen sind in spezieller Weise derart gestaltet, dass Spritzgusswerkzeuge verwendet werden können, die zum Erzeugen der Führungsnut ohne bewegliche Kerne auskommen.

## Patentansprüche

1. Führungsschienenanordnung (16) für Rollos (14) in Kraftfahrzeugen,
mit einem ersten Teil (63), das als Formteil hergestellt ist, das erste Verbindungsmittel (68) aufweist und das einen im Wesentlichen hinterschneidungsfreien Abschnitt einer Führungsnut (27) enthält, der zumindest über einen Teil der Länge der Führungsschienenanordnung (16) durchläuft, und
mit einem zweiten Teil (64), das als Formteil hergestellt ist, das zweite Verbindungsmittel (71) aufweist und das einen im Wesentlichen hinterschneidungsfreien Längsabschnitt einer Führungsnut (27) enthält, der zumindest über einen Teil der Länge der Führungsschienenanordnung (16) durchläuft und mit dem Längsabschnitt des ersten Teils (63) zusammen eine hinterschnittige Führungsnut (27) ergibt,
wobei die beiden Verbindungsmittel (68,71) miteinander verbindbar sind, um die beiden Teile (63,64) relativ zu einander zu positionieren,
wobei das eine der beiden Verbindungsmittel (68,71) eine Leiste,
und das andere der beiden Verbindungsmittel (68,71) eine Nut aufweist,
wobei die Leiste (68) Fortsätze (72)
und die Nut (71) Öffnungen (73) zur Aufnahme der Fortsätze (72) trägt.

2. Führungsschienenanordnung nach Anspruch 1, **dadurch gekennzeichnet, dass** die Leiste (68) eine Ebene definiert, die unter einem von 90° verschiedenen Winkel zu einer Ebene verläuft, die durch den Schlitz (28) der Führungsnut (27) definiert ist.

3. Führungsschienenanordnung nach Anspruch 1, **dadurch gekennzeichnet, dass** das erste und/oder das zweite Teil (63,64) aus einem Thermoplasten bestehen.

4. Führungsschienenanordnung nach Anspruch 1, **dadurch gekennzeichnet, dass** die beiden Teile (63,64) zumindest abschnittsweise miteinander stoffschlüssig verbunden sind, beispielsweise durch Laserschweißen, Ultraschallschweißen, Kleben und ähnliches.

5. Führungsschienenanordnung nach Anspruch 1, **dadurch gekennzeichnet, dass** eines der beiden Teile (63,64) einstückiger Bestandteil eines Abschnitts der Innenverkleidung (6) eines Kraftfahrzeugs ist.

## Claims

1. Guide rail arrangement (16) for roller blinds (14) in motor vehicles,
with a first part (63), which is produced as a shaped part, has first connecting elements (68) and contains a substantially undercut-free section of a guide groove (27), which extends at least over a portion of the length of the guide rail arrangement (16), and
with a second part (64), which is produced as a shaped part, has second connecting elements (71) and contains a substantially undercut-free longitudinal section of a guide groove (27), which extends at least over a portion of the length of the guide rail arrangement (16) and together with the longitudinal section of the first part (63) forms an undercut guide groove (27)
wherein the two connecting elements (68, 71) can be connected to one another in order to position the two parts (63, 64) in relation to one another,
wherein one of the two connecting elements (68, 71) has a ridge and the other of the two connecting elements (68, 71) has a groove, wherein the ridge (68) bears extensions (72) and the groove (71) bears openings (73) to receive the extensions (72).

2. Guide rail arrangement according to claim 1, **characterised in that** the ridge (68) defines a plane, which extends at an angle other than 90° to a plane defined by the slot (28) of the guide groove (27).

3. Guide rail arrangement according to claim 1, **characterised in that** first and/or the second part (63, 64) are made from a thermoplastic.

4. Guide rail arrangement according to claim 1, **characterised in that** the two parts (63, 64) are integrally connected to one another at least in sections, e.g. by laser welding, ultrasonic welding, gluing and the like.

5. Guide rail arrangement according to claim 1, **characterised in that** one of the two parts (63, 64) is an integral component of a section of the inside lining (6) of a motor vehicle.

## Revendications

1. Dispositif de rail de guidage (16) destiné à des rouleaux (14) montés dans des véhicules automobiles,
comportant une première partie (63) qui est fabriquée en tant que pièce moulée et qui présente le premier moyen de liaison (68) et qui comporte une partie essentiellement exempte de contre-dépouille d'une gorge de guidage (27) qui s'étend au moins sur une partie de la longueur du dispositif (16) de rail de guidage,
comportant une deuxième partie (64) qui est fabriquée en tant que pièce moulée et qui présente le deuxième moyen de liaison (71) et comporte un tronçon longitudinal essentiellement exempt de contre-dépouille d'une gorge de guidage (27), qui s'étend au moins sur une partie de la longueur du dispositif (16) de rail de guidage et qui, en conjugaison avec le tronçon longitudinal de la première partie (63), permet d'obtenir une gorge de guidage (27) dotée d'une contre-dépouille,
les deux moyens de liaison (68, 71) pouvant être reliés l'un à l'autre en vue de positionner les deux parties (63, 64) l'une par rapport à l'autre,
un des deux moyens de liaison (68, 71) présentant une languette et l'autre des deux moyens de liaison (68, 71) présentant une gorge, la languette (68) portant des prolongements (72) et la gorge (71) présentant des ouvertures (73) destinées à recevoir les prolongements (72).

2. Dispositif de rail de guidage selon la revendication 1 **caractérisé en ce que** la languette (68) définit un plan qui s'étend avec un angle différent de 90° par rapport à un plan qui est défini par la fente (28) de la gorge de guidage (27).

3. Dispositif de rail de guidage selon la revendication 1 **caractérisé en ce que** la première et/ou la deuxième partie (63, 64) sont constituées d'une matière thermoplastique.

4. Dispositif de rail de guidage selon la revendication 1 **caractérisé en ce que** les deux pièces (63, 64) sont reliées au moins partiellement entre elles par liaison de matières, par exemple par soudage laser, par soudage aux ultrasons, par collage ou par un procédé analogue.

5. Dispositif de rail de guidage selon la revendication 1 **caractérisé en ce qu'**une des deux parties (63, 64) fait corps avec une partie de l'habillage intérieur (6) d'un véhicule automobile.
